Europäisches Patentamt

European Patent Office

Office européen des brevets

(11) Veröffentlichungsnummer: **0 077 492**
**B1**

(12) EUROPÄISCHE PATENTSCHRIFT

(45) Veröffentlichungstag der Patentschrift:
19.06.85

(51) Int. Cl.⁴: **B 01 D 53/34,** B 01 D 53/14,
C 10 K 1/16

(21) Anmeldenummer: 82109241.8

(22) Anmeldetag: 06.10.82

(54) Verfahren und Vorrichtung zum Regulieren des NH3-Gehaltes in der Waschflüssigkeit einer Gaswäsche.

(30) Priorität: 21.10.81 DE 3141772

(43) Veröffentlichungstag der Anmeldung:
27.04.83 Patentblatt 83/17

(45) Bekanntmachung des Hinweises auf die Patenterteilung:
19.06.85 Patentblatt 85/25

(84) Benannte Vertragsstaaten:
AT BE DE FR GB IT NL

(56) Entgegenhaltungen:
EP - A - 0 049 473

Patent Abstracts of Japan Band 3, Nr. 68, 13 Juni 1979
Seite 103C48

(73) Patentinhaber: Linde Aktiengesellschaft,
Abraham-Lincoln-Strasse 21, D-6200 Wiesbaden (DE)

(72) Erfinder: Karwat, Heinz, Dr. Dipl.-Chem., Gistlstrasse 60,
D-8023 Pullach (DE)

(74) Vertreter: Schaefer, Gerhard, Dr., Linde
Aktiengesellschaft Zentrale Patentabteilung,
D-8023 Höllriegelskreuth (DE)

## Beschreibung

Die Erfindung betrifft ein Verfahren zum Regulieren des $NH_3$-Gehaltes in einer bei einem Verfahren zum Auswaschen saurer Gase aus Gasgemischen verwendeten, als physikalisches Waschmittel wirkenden organischen Flüssigkeit, die nach dem Waschvorgang von den absorbierten Gasbestandteilen befreit und im Kreislauf wieder eingesetzt wird, sowie eine Vorrichtung zur Durchführung des Verfahrens.

Bei der Herstellung technischer Gase aus Rohgas müssen aus diesem saure Bestandteile, wie vor allem $CO_2$ und $H_2S$, aber auch COS, ausgeschieden werden. Dazu eignen sich als Waschmittel beispielsweise Alkohole, Glykole und Äther. Als besonders günstig hat sich auch das Methanolwaschverfahren erwiesen, bei welchem die sauren Bestandteile bei Temperaturen bis unter $-70°C$ und Drücken bis zu 80 bar mit Methanol ausgeschieden werden.

Das zu reinigende Rohgas enthält meist auch Spuren von Ammoniak, die wegen der sehr großen Löslichkeit in Methanol in diesem angereichert werden. Eine derartige Anreicherung mit Ammoniak kann wünschenswert sein, wie z. B. aus der DE-A-2 759 123 zu entnehmen ist. Aus dieser DE-A ist ein Verfahren bekannt, bei dem einem physikalischen Waschmittel, wie Methanol oder Äthanol, Ammoniak in geringen Mengen, nämlich 0,05 bis 0,5 Gew.-% zugegeben wird. Die Wäsche mit Ammoniakzusatz stellt eine kombinierte physikalisch-chemische Wäsche dar, die bewirkt, daß eine wesentlich geringere Menge an Waschmittel eingesetzt werden muß.

Ein derartiges Verfahren ist jedoch nur dann sinnvoll anwendbar, wenn der Ammoniakgehalt konstant gehalten werden kann, also keine übermäßige Anreicherung erfolgt. Oft schreitet aber die Anreicherung von Ammoniak in Methanol so weit fort, daß sich durch die gleichzeitige Anwesenheit von Kohlendioxid Festausscheidungen von Ammoniumcarbaminat in den Gasleitungen bilden und/oder der Wärmehaushalt durch die Reaktionswärme von $NH_3$ mit den sauren Gasbestandteilen beeinträchtigt wird, was den Betrieb des Waschverfahrens erheblich stören kann.

In der EP-A-0 049 473 (Priorität: 30. Sept. 1980, Anmeldetag: 30. Sept. 1981, veröffentlicht: 14. April 1982) der Anmelderin ist ein Verfahren zum Regulieren des Ammoniakgehaltes in dem bei der Wäsche verwendeten Methanol mittels eines Ionenaustauschers beschrieben. Dieses Verfahren hat jedoch den Nachteil, daß der apparative Aufwand zur periodischen Regenerierung des Ionenaustauschers groß ist und überdies zusätzliche Mengen an Methanol-Wasser-Gemisch und Abwasser anfallen.

Der vorliegenden Erfindung liegt daher die Aufgabe zugrunde, ein Verfahren zur Verfügung zu stellen, das einen störungsfreien und zuverlässigen Ablauf eines Gesamtwaschverfahrens zum Entfernen saurer Gase aus Gasgemischen mittels eines physikalisch wirkenden organischen Waschmittels gewährleistet.

Diese Aufgabe wird erfindungsgemäß dadurch gelöst, daß dem Waschmittel ein Fällungsmittel zum Ausfällen von Ammoniak zugegeben und der Fällungsniederschlag und das Waschmittel voneinander getrennt werden.

Diese Verfahrensweise ermöglicht es, Ammoniak auf einfache Weise aus der Waschflüssigkeit zu entfernen. Es entfällt damit die Ausbildung von Festausscheidungen von $NH_4NH_2CO_2$ in den Gasleitungen und der Wärmehaushalt der Wäsche wird nicht mehr durch Reaktionswärme des Ammoniaks mit Kohlendioxid und Schwefelwasserstoff gestört.

Als besonders günstig hat sich dabei die Verwendung von Säuren als Fällungsmittel herausgestellt. Überraschenderweise fallen nach Säurezugabe gut abdekantierbare, filtrier- oder zentrifugierbare Niederschläge aus. Alternativ kann das Waschmittel auch eingedampft oder oder in einem Gasstrom versprüht werden. Insbesondere eignet sich die billige Schwefelsäure zur Ausfällung des Ammoniaks. Das dabei gebildete Ammoniumsulfat läßt sich in einfacher Weise durch z. B. Filtrieren oder Abdekantieren von dem Waschmittel abtrennen und kann als Feststoff oder nach Zugabe von Wasser als Lösung vom Filter, Dekanter oder Zentrifuge entnommen werden und als umweltfreundliches Düngemittel zur weiteren Verwendung kommen. Gleiche Vorteile werden durch Zugabe von Phosphorsäure erreicht. Als weitere Fällungsmittel können jedoch auch Salpetersäure und Halogen-Wasserstoff-Säuren oder organische Säuren verwendet werden, wenn die Herstellung der entsprechenden Ammoniumsalze angestrebt wird.

Wie festgestellt wurde, konnten befriedigende Ergebnisse bei der Sauergasentfernung erzielt werden, wenn die Ammoniakkonzentration in der umlaufenden Waschflüssigkeit im Bereich von 300 bis 2000 mg/kg, vorzugsweise 500 bis 1000 mg/kg gehalten wurde. Dazu ist es günstig, wenn das Fällungsmittel nur einem Teil des insgesamt umlaufenden Waschmittels zugegeben wird.

Gemäß einer weiteren Ausbildung des Erfindungsgedankens ist dabei vorgesehen, daß das Ausfällen des Ammoniaks bei Temperaturen im Bereich von 0 bis 60°C, bevorzugt im Bereich von 10 bis 50°C erfolgt. Dabei ist es von Vorteil, nach dem Ausfällen das noch Reaktionsprodukte enthaltende Waschmittel auf Temperaturen im Bereich von 0 bis $-95°C$, vorzugsweise 0 bis $-40°C$ zur Komplettierung der Ausfällung abzukühlen.

Die Erfindung betrifft weiterhin eine Vorrichtung zur Durchführung des erfindungsgemäßen Verfahrens mit einer Waschsäule und mindestens einer Regeneriersäule, die durch einen Säurebehälter, eine Säuredosierpumpe und eine Trennvorrichtung, die als Dekantiergefäß, Filter, Zentrifuge oder Eindampfungseinrichtung ausgebildet sein kann, gekennzeichnet ist.

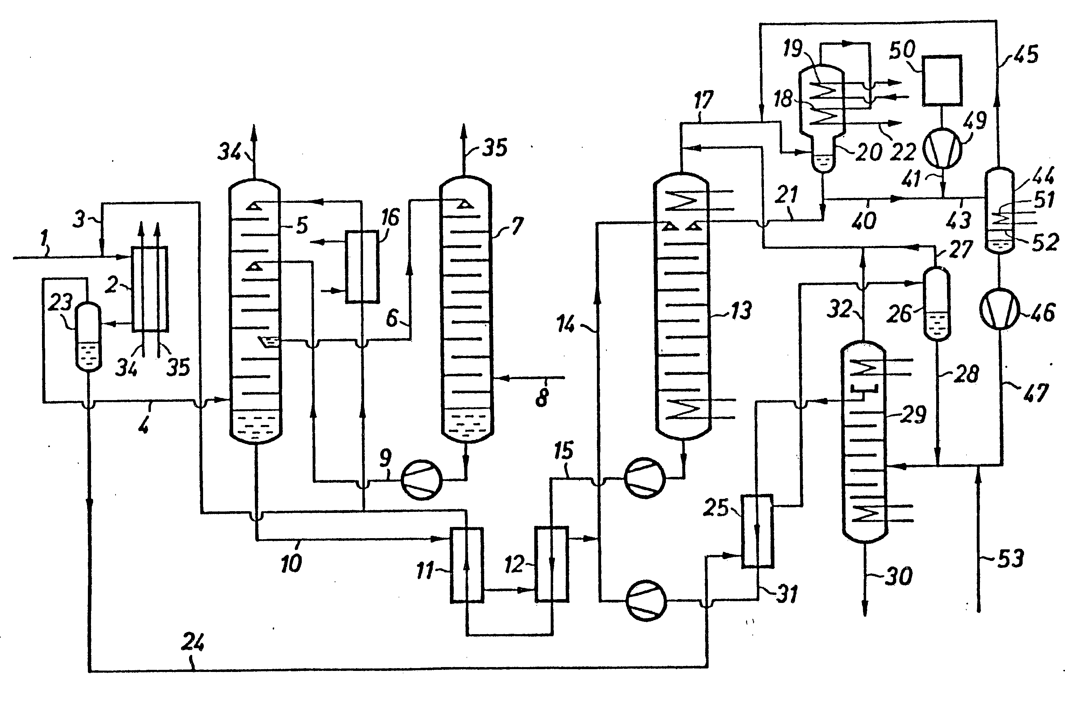

Im folgenden wird die Erfindung anhand eines Ausführungsbeispiels, das in der Figur schematisch dargestellt ist, näher erläutert.

Das Ausführungsbeispiel bezieht sich auf die Reinigung eines Rohgases mittels Methanol. Doch ist die Erfindung nicht auf ein derartiges Methanol-Waschverfahren beschränkt, sondern kann auch bei Verwendung anderer Waschmittel, wie insbesondere weiterer Alkohole, Glykole oder Äther, Anwendung finden.

Bei 1 strömen 100 000 Nm³/h zu reinigendes Rohgas mit einer Temperatur von ca. 30°C und einem Druck von 70 bar in einen Vorkühler 2 ein. Das Rohgas besteht hauptsächlich aus $H_2$ und $CO_2$, enthält aber auch CO, $H_2S$ und 80 kg/h Wasser und Spuren von $NH_3$ (10 vppm). Im Vorkühler 2 wird das mit Wasser gesättigte Gas mittels aus der Wäsche über die Leitungen 34 und 35 rückkehrender Gasfraktionen, auf die noch näher eingegangen wird, auf ca. −30°C abgekühlt. Um eine Verlegung mit Wassereis zu verhindern, werden in den Vorkühler 2 über Leitung 3 160 kg/h Methanol, das aus der nachfolgenden Methanolwäsche abgezogen wird, eingespritzt. Das so vorgekühlte Rohgas gelangt über einen Abscheider 23 und Leitung 4 zur Entfernung der sauren Bestandteile $CO_2$ und $H_2S$ in eine Methanolwaschsäule 5. Dort werden im unteren Teil mit einer Methanolteilmenge Schwefelverbindungen ausgewaschen. Im mittleren Teil der Waschsäule 5 erfolgt die $CO_2$-Grobwäsche damit der Hauptmenge an Methanol und im oberen Teil die Feinreinigung. Im mittleren Teil der Waschsäule 5 wird mit teilregeneriertem, im oberen Teil mit vollständig regeneriertem Methanol gewaschen. Das gereinigte Gas strömt über Leitung 34 ab zum Vorkühler 2 und dann zur weiteren Verarbeitung.

Das mit $CO_2$ beladene Methanol wird über Leitung 6 einer Regeneriersäule 7 zugeführt und in dieser durch Strippen mit einem durch Leitung 8 zugeführten Hilfsgas von $CO_2$ befreit und gelangt wieder über Leitung 9 in die Waschsäule 5 zurück. Die dabei freiwerdenden Gase, hauptsächlich $CO_2$ und Strippgas werden über Kopf der Säule 7 abgeführt und strömen über Leitung 35 zum Vorkühler 2.

Das sich im Sumpf der Waschsäule 5 ansammelnde, $H_2S$ und $CO_2$ enthaltende Methanol gelangt über Leitung 10 und die Wärmetauscher 11 und 12 in eine Regeneriersäule 13. Im Wärmetauscher 11 wird das Metahnol auf etwa Umgebungstemperatur, im Wärmetauscher 12 auf etwa 65°C angewärmt und gelangt dann über Leitung 14 in die Regeneriersäule 13. Dort wird das Methanol durch Kochen vollständig entgast und das regenerierte Methanol vom Sumpf der Regeneriersäule 13 über Leitung 15 abgezogen und in den Wärmetauschern 12 auf 30°C und 11 auf −10°C abgekühlt. Nach weiterer Abkühlung auf etwa −40°C im Kältemittelverdampfer 16 gelangt das Methanol auf die Waschsäule 5 zurück.

Die im Kopf der Regeneriersäule 13 abziehende $H_2S$- und $CO_2$-Fraktion wird über Leitung 17 in den Wärmetauscher 18 geführt, in dem sie im Gegenstrom gekühlt wird. Im Kältemittelverdampfer 19 wird sie auf −40°C gekühlt, wobei mitgeführtes Methanol auskondensiert und sich im Abscheider 20 sammelt. Das Kondensat wird über Leitung 21 auf die Regeneriersäule 13 zurückgeführt. Nach Anwärmung im Gegenstrom im Austauscher 18 verläßt die $CO_2$- und $H_2S$-Fraktion die Anlage durch Leitung 22.

Das im Vorkühler 2 eingespritzte und mit Wasser beladene kalte (−30°C) Methanol gelangt in den Abscheider 23 über Leitung 24 und nach Anwärmung auf Umgebungstemperatur in einem Gegenstromwärmeaustauscher 25 in einen Abscheider 26, wo die Hauptmenge der gelösten Gase, insbesondere $CO_2$, durch Entspannen auf 2 bar abgetrennt wird. Diese Gase werden über Leitung 27 der $CO_2$- und $H_2S$-Fraktion aus der Regeneriersäule 13 zugemischt. Das Methanol-Wasser-Gemisch gelangt über Leitung 28 in die dampfbeheizte und wassergekühlte Wasser-Methanol-Trennsäule 29. Das Wasser wird über Leitung 30 am Fuß, das Methanol über Wärmeaustauscher 25 und Leitung 31 am Kopf der Säule 29 abgezogen und zur Methanol-Regeneriersäule 13 geführt. Inertgase können die Säule 29 durch Leitung 32 verlassen.

Der im Rohgas mitgeführte Ammoniak löst sich teilweise im Einspritzmethanol der Vorkühlung 2 und gelangt mit dem Methanol über Leitung 24 in die Methanol-Wasser-Trennsäule 29, in der er durch die Sumpfheizung ausgetrieben wird und daher mit dem Methanol über Leitung 31 in den Waschkreislauf gelangt. Ein anderer Teil des Ammoniaks bleibt jedoch weiter im Rohgas und gelangt auf diese Weise über die Waschsäule 5 mit dem Waschmethanol, in dem er sich löst, ebenfalls in den Waschkreislauf, in dem er sich anreichert. Von dort gelangt Ammoniak entsprechend seinem Gehalt im Waschmethanol über die Regeneriersäule 13, in deren Kopf eine zusätzliche örtliche Anreicherung des Ammoniaks in Gasphase und Flüssigkeit eintritt, und Leitung 17 als Gasbestandteil in den Abscheider 20.

Der Ammoniak bildet dort mit dem in der $H_2S$-Fraktion enthaltenen $CO_2$ Ammoniumcarbaminat, das sich bevorzugt im Wärmeaustauscher 19 als Festausscheidung niederschlägt. Der Ammoniak muß also auf eine solche Konzentration im Waschmethanol begrenzt werden, daß sich kein festes Ammoncarbaminat dort ausscheiden kann.

Dazu wird erfindungsgemäß von dem aus Abscheider 20 abfließenden Methanol (25°C, 10 g $NH_3$/l, 0,8 g $H_2O$/l) durch eine Leitung 40 ein Teilstrom von 84,4 l/h, der 49,6 gmol $NH_3$ enthält, entnommen. Durch eine Leitung 41 werden 1,4 l/h Schwefelsäure (z. B. 94,7gew.-%ig) aus einem Vorratsbehälter 50 mittels einer Dosierpumpe 49 so in den Methanolstrom der Leitung 40 eingespeist, daß eine innige Durchmischung beider Ströme in einer Mischstrecke 43 eintritt. Dabei tritt sofort eine Reaktion des Ammoniaks mit der Schwefelsäure ein, die sich durch Ausscheidung von kristallinem Ammoniumsulfat äußert. Es wird hierbei durch die Neutralisation des Ammoniaks Wärme freigesetzt, die das Methanol auf ca. 44°C erwärmt. Auf diese Weise und bei Vermeidung eines wesentlichen Schwefelsäureüberschusses tritt keine Reaktion der Schwefelsäure mit dem Methanol ein.

Durch die Säurezugabe werden in einer Trennvorrichtung 44, die als Abscheider ausgebildet ist, äquivalente Mengen $CO_2$ und $H_2S$ (etwa 0,5 $Nm^3$/h) aus dem $NH_3$-haltigen Methanol freigesetzt, die durch eine Leitung 45 in Leitung 17 zurückgeführt werden. Ebensogut können das entgasende $CO_2$ und $H_2S$ auch direkt in den unteren Teil des Abscheiders 20 geführt werden.

Durch eine im Abscheider 44 angeordnete und von einem Kühlmittel durchströmte Kühlschlange 51 wird das im Abscheider 44 befindliche Methanol-Salz-Gemisch auf 0°C abgekühlt, wodurch eine weitere Menge des im Methanol gelösten Ammoniumsulfats ausgeschieden wird.

Im unteren Teil des Abscheiders 44 befindet sich ein poröser Boden 52 (z. B. eine Sintermetallfritte), der als Filter wirkt und das gefällte Salz (2,95 kg/h) vom Methanol trennt. Ebensogut kann das Salz-Flüssigkeits-Gemisch aus dem Kühler-Abscheider 44 in einer Filterpresse getrennt werden. Mittels einer Pumpe 46 wird das abfließende Methanol, das nunmehr noch 0,33 kg/h gelöstes Ammoniumsulfat enthält, über eine Leitung 47 im Zulauf 28 zur Methanol-Wasser-Trennsäule geführt. Dabei wird das Methanol der Leitung 47 durch Laugezugabe (z. B. Natronlauge, Alkalihydroxid- oder Alkalicarbonatlösung) über Leitung 53 alkalisch eingestellt. Die Sulfat- und Natriumionen verlassen zusammen mit dem Wasser die Methanol-Wasser-Trennsäule 29 am Boden, während die $NH_4^+$-Ionen als Ammoniak zusammen mit dem Methanol die Säule über Kopf verlassen.

Das durch Leitung 40 entnommene Methanol wird also bei den hier gewählten Bedingungen zu 90% von $NH_3$ befreit. Von den mit dem Rohgas eingefahrenen 10 ppm $NH_3$ ($\triangleq 1$ $Nm^3$/h $\triangleq 760$ g/h) werden 100% kristallines Ammoniumsulfat abgeschieden. Wird das Methanol im Abscheider 44 auf tiefere Temperatur gekühlt (z. B. −22°C) oder wird ein wasserhaltiges Methanol (z. B. bei Leitung 28) z. B. alternativ mit Phosphorsäure erfindungsgemäß behandelt, so ergeben sich die in der Tabelle zusammengefaßten Abscheidegrade für den im Methanol enthaltenen Ammoniak. Der sich mit zunehmendem Wassergehalt des Methanols verringernde Abscheidegrad wird also durch Absenken der Temperatur der Lösung kompensiert.

Das abgeschiedene Ammoniumsulfat kann aus dem Abscheider 44 entweder als Feststoff entnommen werden, wozu der Abscheider 44 beispielsweise ausgewechselt wird, oder mit Hilfe von Wasser als Lösung ausgespült werden, was für eine Automatisierung vorteilhaft ist.

Die Erfindung ist jedoch nicht auf die in der Figur dargestellte Ausführung beschränkt. Die Ausfällung des Ammoniaks kann vielmehr an jeder geeigneten Stelle erfolgen, so z. B. auch im Ablauf der Methanol-Regeneriersäule 13 in Leitung 15 nach dem Wärmetauscher 12. Dort allerdings ist die Entgasung von $H_2S$ und $CO_2$ nur gering. Das von Ammoniak im wesentlichen befreite Methanol kann dabei ebenfalls auf die Methanol-Wasser-Trennsäule geführt werden.

Auch die Trennung der ausgefällten Salze vom Waschmittel ist nicht auf den Filtriervorgang beschränkt. Vielmehr besteht auch die Möglichkeit, die Salze durch Zentrifugieren oder Dekantieren vom Waschmittel zu trennen. Alternativ kann dieses Waschmittel auch eingedampft oder in einen Gasstrom versprüht werden, z. B. das Rohgas den Strippstickstoff oder die $H_2S$-Fraktion und folgender Abscheidung des Ammoniumsalzes aus dem Gasstrom.

Tabelle

| Methanolstrom | A | A | A | B | B | C | C |
|---|---|---|---|---|---|---|---|
| $NH_3$-Gehalt (g/l) | 10 | 10 | 10 | 5,2 | 5,2 | 7,8 | 7,8 |
| Wassergehalt (Gew.-%) | <1 | <1 | 1 | 30 | 30 | 30 | 30 |
| Temperatur (°C) | 0 | −22 | +18 | 0 | −22 | +20 | −22 |
| Fällung als | Sulfat | Sulfat | Phosphat | Sulfat | Sulfat | Phosphat | Phosphat |
| $NH_3$-Ausscheidegrad (%) | 90 | 93 | >98 | 50 | 74 | 90 | 94 |

**Patentansprüche**

1. Verfahren zum Regulieren des $NH_3$-Gehaltes in der bei einem Verfahren zum Auswaschen saurer Gase aus Gasgemischen verwendeten, als physikalisches Waschmittel wirkenden organischen Flüssigkeit, die nach dem Waschvorgang von den absorbierten Gasbestandteilen befreit und im Kreislauf wieder eingesetzt wird, dadurch gekennzeichnet, daß dem Waschmittel ein Fällungsmittel zum Ausfällen von Ammoniak zugegeben und der Fällungsniederschlag und das Waschmittel voneinander getrennt werden.

2. Verfahren nach Anspruch 1, dadurch gekennzeichnet, daß nur einem Teil des insgesamt umlaufenden Waschmittels ein Fällungsmittel zugegeben wird.

3. Verfahren nach Anspruch 1 oder 2, dadurch gekennzeichnet, daß als Fällungsmittel eine Säure verwendet wird.

4. Verfahren nach Anspruch 3, dadurch gekennzeichnet, daß als Fällungsmittel Schwefelsäure verwendet wird.

5. Verfahren nach Anspruch dadurch gekennzeichnet, daß als Fällungsmittel Phosphorsäure verwendet wird.

6. Verfahren nach einem der Ansprüche 1 bis 5, dadurch gekennzeichnet, daß der Fällungsniederschlag durch Abdekantieren aus dem Waschmittel entfernt wird.

7. Verfahren nach einem der Ansprüche 1 bis 5, dadurch gekennzeichnet, daß der Fällungsniederschlag durch Filtrieren aus dem Waschmittel entfernt wird.

8. Verfahren nach einem der Ansprüche 1 bis 5, dadurch gekennzeichnet, daß der Fällungsniederschlag durch Zentrifugieren aus dem Waschsmittel entfernt wird.

9. Verfahren nach einem der Ansprüche 1 bis 5, dadurch gekennzeichnet, daß der Fällungsniederschlag durch Eindampfen des Waschmittels aus diesem abgetrennt wird.

10. Verfahren nach einem der Ansprüche 1 bis 9, dadurch gekennzeichnet, daß das Ausfällen des Ammoniaks bei Temperaturen im Bereich von 0 bis 60°C, bevorzugt im Bereich von 10 bis 50°C erfolgt.

11. Verfahren nach einem der Ansprüche 1 bis 10, dadurch gekennzeichnet, daß nach dem Ausfällen das noch Reaktionsprodukt enthaltende Waschmittel auf Temperaturen im Bereich von 0 bis −95°C, vorzugsweise 0 bis −40°C abgekühlt wird.

12. Verfahren nach einem der Ansprüche 1 bis 11, dadurch gekennzeichnet, daß der Ammoniak in dem umlaufenden Waschmittel bis auf einen Restgehalt von 300 bis 2000 mg/kg, vorzugsweise 500 bis 1000 mg/kg entfernt wird.

13. Vorrichtung zur Durchführung des Verfahrens nach einem der Ansprüche 1 bis 12 mit einer Waschsäule (5) und mindestens einer Regeneriersäule (7; 13), gekennzeichnet durch einen Säurebehälter (50), eine Säuredosierpumpe (49) und mindestens eine Trennvorrichtung (44).

14. Vorrichtung nach Anspruch 13, dadurch gekennzeichnet, daß die Trennvorrichtung (44) als Filter ausgebildet ist.

**Claims**

1. A process for regulating the $NH_3$-content in the organic liquid which is used in a process for washing acid gases from gas mixtures and acts as a physical washing agent, and which after the washing step is freed from the absorbed gas components and reintroduced into the cycle, characterised in that a precipitant for precipitating ammonia is added to the washing agent and the precipitate and the washing agent are separated from one another.

2. A process as claimed in Claim 1, characterised in that a precipitant is only added to part of the total circulating washing agent.

3. A process as claimed in Claim 1 or 2, characterised in that an acid is used as precipitant.

4. A process as claimed in Claim 3, characterised in that sulphuric acid is used as precipitant.

5. A process as claimed in Claim 3, characterised in that phosphoric acid is used as precipitant.

6. A process as claimed in one of Claims 1 to 5, characterised in that the precipitate is removed from the washing agent by decanting.

7. A process as claimed in one of Claims 1 to 5, characterised in that the precipitate is removed from the washing agent by filtering.

8. A process as claimed in one of Claims 1 to 5, characterised in that the precipitate is removed from the washing agent by centrifuging.

9. A process as claimed in one of Claims 1 to 5, characterised in that the precipitate is separated from the washing agent by evaporating the washing agent.

10. A process as claimed in one of Claims 1 to 9, characterised in that the precipitation of the ammonia is carried out at temperatures in the range of 0 to 60°C, preferably in the range of 10 to 50°C.

11. A process as claimed in one of Claims 1 to 10, characterised in that, after the precipitation, the washing agent, which still contains reaction product, is cooled to tempratures in the range of 0 to −95°C, preferably 0 to −40°C.

12. A process as claimed in one of Claims 1 to 11, characterised in that the ammonia in the circulating washing agent is removed down to a residual content of 300 to 2000 mg/kg, preferably 500 to 1000 mg/kg.

13. Apparatus for carrying out the process as claimed in one of Claims 1 to 12 comprising a washing column (5) and at least one regenerating column (7; 13), characterised by an acid container (50), an acid dosing pump (49) and at least one separating device (44).

14. Apparatus as claimed in Claim 13, characterised in that the separating device (44) is in the form of a filter.

## Revendications

1. Procédé de régulation de la teneur en NH₃ d'un liquide organique utilisé comme agent de lavage physique pour le lavage des gaz acides contenus dans un mélange de gaz, le liquide étant libéré par lavage des fractions gazeuses absorbées puis étant réinjecté dans le circuit, caractérisé en ce que l'on ajoute à l'agent de lavage un floculant permettant la précipitation de l'ammoniac et en ce que l'on sépare le précipité et l'agent de lavage.

2. Procédé selon la revendication 1, caractérisé en ce que l'on ajoute un floculant qu'à une partie de l'agent de lavage en circulation.

3. Procédé selon la revendication 1 ou 2, caractérisé en ce que l'on utilise comme floculant un acide.

4. Procédé selon la revendication 3, caractérisé en ce que l'on utilise comme floculant l'acide sulfurique.

5. Procédé selon la revendication 3, caractérisé en ce que l'on utilise comme floculant l'acide phosphorique.

6. Procédé selon l'une des revendications 1 à 5, caractérisé en ce que l'on sépare le précipité de l'agent de lavage par décantion.

7. Procédé selon l'une des revendications 1 à 5, caractérisé en ce que l'on sépare le précipité de l'agent de lavage par filtration.

8. Procédé selon l'une des revendications 1 à 5, caractérisé en ce que l'on sépare le précipité de l'agent de lavage par centrifugation.

9. Procédé selon l'une des revendications 1 à 5, caractérisé en ce que l'on sépare le précipité de l'agent de lavage par évaporation de l'agent de lavage.

10. Procédé selon l'une des revendications 1 à 9, caractérisé en ce que la précipitation de l'ammoniaque est réalisée dans une zone de température comprise entre 0 et 60°C, de préférence entre 10 et 50°C.

11. Procédé selon l'une des revendications 1 à 10, caractérisé en ce que qu'après la précipitation, l'agent de lavage contenant encore du produit de réaction est refroidi à des températures comprises entre 0 et −95°C, de préférence entre 0 et −40°C.

12. Procédé selon l'une des revendications 1 à 11, caractérisé en ce que l'ammoniaque est séparé de l'agent de lavage en circulation jusqu'à une teneur résiduelle de 300 à 2000 mg/kg, de préférence de 500 à 1000 mg/kg.

13. Dispositif pour la mise en œuvre du procédé selon l'une des revendications 1 à 12, comportant une colonne de lavage (5) et au moins une colonne de régénération (7, 13), caractérisé par un réservoir d'acide (50), une pompe doseuse d'acide (49) et au moins un système de séparation (44).

14. Dispositif selon la revendication 13, caractérisé en ce que le système de séparation (44) est réalisé sous la forme d'un filtre.

6